Europäisches Patentamt

(19) European Patent Office

Office européen des brevets

(11) Publication number: **0 062 431**
**B1**

(12) **EUROPEAN PATENT SPECIFICATION**

(45) Date of publication of patent specification: **01.10.86**

(21) Application number: **82301445.1**

(22) Date of filing: **19.03.82**

(51) Int. Cl.⁴: **G 06 F 13/00, G 06 F 15/06**

(54) A one chip microcomputer.

(30) Priority: **20.03.81 JP 40801/81**
**25.03.81 JP 43503/81**

(43) Date of publication of application:
**13.10.82 Bulletin 82/41**

(45) Publication of the grant of the patent:
**01.10.86 Bulletin 86/40**

(84) Designated Contracting States:
**DE FR GB NL**

(56) References cited:
**DE-A-2 045 833**
**US-A-4 181 938**
**US-A-4 240 138**
**IEEE DIGEST OF PAPERS FTCS-10, 1st-3rd
October 1980, The 10th international
symposium on fault - tolerant computing
Kyoto, Japan, New York (USA); S.FUNATSU et
al.: "Digital fault simulation in bidirectional bus
circuit environments"**
**ELECTRONIC DESIGN, vol. 26, no. 13, June
1978, pages 78-84, Rochelle Park (USA);
BURTON: "Know a microcomputer's bus
structure"**

(73) Proprietor: **FUJITSU LIMITED**
**1015, Kamikodanaka Nakahara-ku
Kawasaki-shi Kanagawa 211 (JP)**

(72) Inventor: **Murakami, Jyoji
236-1-410 Suwa Takatsu-ku
Kawasaki-shi Kanagawa 213 (JP)**
Inventor: **Watanabe, Tsuyoshi
568-9, Higashihongo-cho Midori-ku
Yokohama-shi Kanagawa 226 (JP)**

(74) Representative: **Rackham, Stephen Neil et al
GILL JENNINGS & EVERY 53-64 Chancery Lane
London WC2A 1HN (GB)**

(56) References cited:
**ELEKTRIE, vol. 32, no. 8, 1978, pages 429-437,
Berlin (DE); M.HANN et al.:
"Mikroprozessoren,Mikroprozessrechner und
Mikroprozessrechnersysteme"**
**THE BELL SYSTEM TECHNICAL JOURNAL, vol.
58, no. 4, April 1979, pages 959-962, New York
(USA); W.F.CHOW et al.: "MAC-4: A single-chip
microcomputer"**
**RCA Data Bulletin CDP 1804, File No. 1147,
October 1978**
**RCA User Manual for the CDP 1802, 1976**

## Description

The present invention relates to a one chip microcomputer.

In the early seventies, a 4-bit microprocessor such as an Intel 4004, which was also called a microcomputer only had a central processing unit (abbreviated CPU) formed on a single chip. In recent years, however, LSI (Large Scale Integration) technology has developed with the result that highly-integrated one chip microcomputers have been also developed. A one chip microcomputer generally comprises a CPU, a random access memory (abbreviated RAM), a read only memory (abbreviated ROM), input/output (abbreviated I/O) ports, a clock generator and the like all formed on the same single chip. In other words, such a one chip microcomputer has all the computer functions on a single chip and, accordingly, its cost-performance is greatly enhanced.

In conventional one chip microcomputers, since the CPU and the RAM are connected by interconnections within a chip, data transfer therebetween cannot generally be monitored from the outside. As a result, it is difficult to test the chip to detact any malfunctions in it. Therefore, it is necessary to transfer data from the RAM to the outside or vice versa, to be able to monitor the CPU operation state.

Several approaches may be taken to meet this requirement for one chip microcomputers. One approach is to cause the CPU to perform the data transfer between the RAM and the outside. In this case, however, the load on the CPU becomes large and, accordingly, the throughput of the microcomputer is reduced. In addition, instruction sequences (programs) are fixed in the ROM and, therefore, the operation state of the CPU cannot be readily determined from the exterior of the chip. As a result, it is difficult to access a desired area of the RAM by the CPU. Another approach is to use direct memory access (abbreviated DMA). That is, under the control of a direct memory access controller (abbreviated DMAC), which is set by the CPU, a direct transfer of data is provided between the RAM and the I/O ports. In this case, however, I/O ports specifically for the DMA operation mode are necessary, and thus the number of terminals (pins) connected to the I/O ports is therefore increased. For example, in the case of an 8-bit parallel transfer system, eight additional terminals are necessary, which is disadvantageous in practice. In addition, such additional terminals are generally necessary only during the manufacture and testing of the microcomputer and, thereafter are redundant.

The COSMAC microcomputer CDP 1804 described in RCA Data Bulletin, File No. 1147 pages 1—8 is a one chip microcomputer in which the following elements are all integrated together on a single semiconductor chip:

a central processing unit having arithmetic, logic and control units;

an internal random access memory for storing intermediate data with instructions processed by the central processing unit;

a direct memory access controller controlled by signals from the central processing unit for providing a read out of data stored in a predetermined area of the internal random access memory;

a parallel input/output port;

terminal means associated with the input/output port;

a data bus for carrying the said data stored in the said predetermined area of the internal random access memory;

means coupling the input/output port and the data bus to the terminal means;

a time division means controlling the means coupling the input/output port and the data bus to the terminal means, the time division means being controlled by the direct memory access controller so that, during a central processing unit operating mode, data processed by the central processing unit is transferred directly from the input/output port to the terminal means, and during the direct memory access mode the said data stored in said predetermined area of the internal random access memory is transferred from the data bus to the terminal means; and, means to provide synchronisation signals to indicate the central processing unit operating mode or the direct memory access mode.

According to the present invention such a one chip microcomputer also includes

an address counter controlled by the direct memory access controller for generating an address signal to read the said data from the said predetermined area of the internal random access memory; and, means to provide synchronisation signals to enable the address of the internal random access memory being accessed to be identified without requiring an external address bus.

The one chip microcomputer in accordance with this invention enables direct data transfer to take place between the internal random access memory of the computer and the outside without significantly increasing the number of terminals that are required.

An embodiment of the present invention will now be described with reference to the accompanying drawings; in which:—

Figure 1 is a block diagram; and,

Figures 2A, B and C are timing diagrams illustrating signals generated in the embodiment.

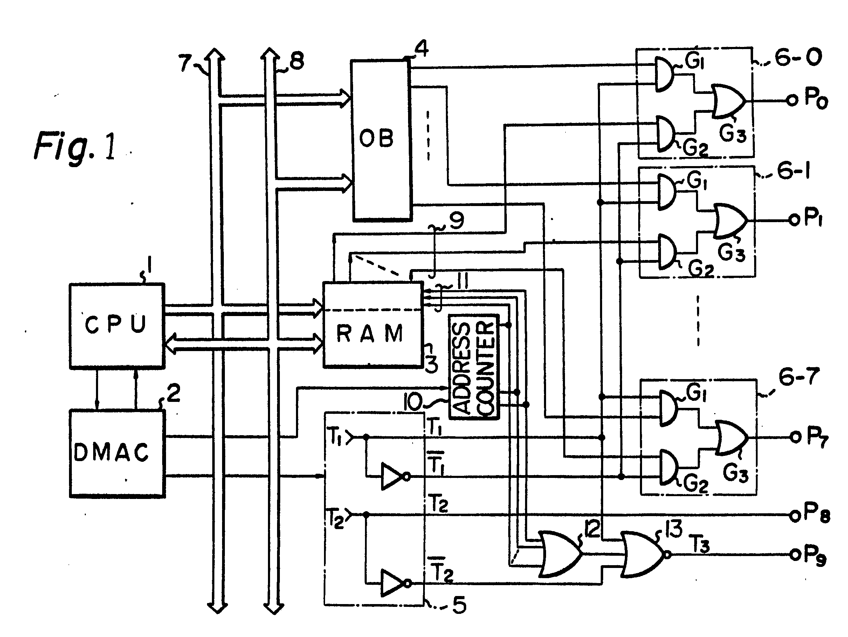

In Figure 1, which illustrates an embodiment of the one chip microcomputer according to the present invention, 1 is a central processing unit (CPU) having arithmetic, logic and control units; 2 is a direct memory access controller (DMAC) which is set by the CPU 1; 3 is a random access memory (RAM) for storing intermediate data and instructions processed by the CPU 1; 4 is an output buffer register for storing output data processed by the CPU 1; 5 is a time-division control circuit controlled by the DMAC 2; 6-0, 6-1, ..., 6-7 are I/O ports; 7 is a data bus; and 8 is an address bus. The RAM 3 has a data bus 9 for the direct memory access (DMA) operation mode. 10 is an address counter, 11 an address bus, 12 an OR gate, and 13 a NOR gate. The time-division control circuit 5 generates an inverted signal $\overline{T}_2$ of the clock signal $T_2$ and applies this to a terminal $P_9$ via the NOR gate 13. All the elements of Figure 1 are formed on a single semiconductor chip.

During the CPU operation mode, output data (which is referred to as CPU output data) is stored in the output buffer register 4 and, after that, the CPU output data is transferred through the ports 6-0, 6-1, ...., 6-7 and terminals $P_0$, $P_1$, ..., $P_7$ to the exterior. Contrary to this, during the DMA operation, output data (which is referred to as DMA output data) is read out of the area of the RAM 3 addressed by the address bus 11, to the DMA data bus 9. The DMA output data is also transferred through the ports 6-0, 6-1, ..., 6-7 and the terminals $P_0$, $P_1$, ..., $P_7$ to the exterior. Time-division control for such two kinds of output data is performed by the time-division control circuit 5 which is also controlled by the DMAC 2.

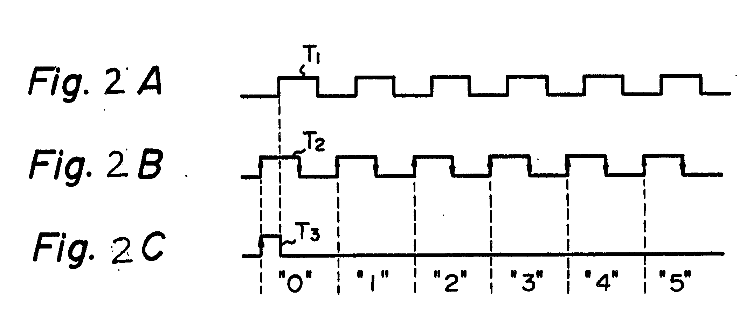

In more detail, the time-division control circuit 5, which is controlled by the DMAC 2, generates a clock signal $T_1$ as illustrated in Figure 2A, and its inverted signal $\overline{T}_1$, and a clock signal $T_2$ as illustrated in Figure 2B. In this case, the difference in phase between the clock signals $T_1$ and $T_2$ is about 90 degrees. Such clock signals $T_1$ and $T_2$ can be easily formed by using a reference signal of a reference clock generator and frequency dividers (not shown). On the other hand, each of the ports 6-0, 6-1, ..., 6-7 comprises two AND gates $G_1$ and $G_2$, and an OR gate $G_3$. Each gate $G_1$ transmits the CPU output data from the output buffer register 4 to the exterior when the potential of the clock signal $T_1$ is high, while each gate $G_2$ transmits the DMA output data from the RAM 3 to the exterior when the potential of the clock signal $\overline{T}_1$ is high. Thus, the CPU output data and the DMA output data are alternately transmitted through the ports 6-0, 6-1, ..., 6-7 and the terminals $P_0$, $P_1$, ..., $P_7$ to the exterior.

It should be noted that the read operation timing of the DMAC 2 for the RAM 3 is in synchronization with the high potential of the clock signal $\overline{T}_1$. The DMAC 2 increments the address counter 10 which generates an address signal to the DMA address bus 11. Therefore, a plurality of words which serve as the DMA data are read out of the RAM 3 to the DMA data bus 9. For example, if the address counter 10 comprises 4 bits, eight words allocated by addresses "0", "1", "2", ..., "7" can be read out from the RAM 3.

Next, the separation of the CPU data and the DMA data will be explained. In an external circuit (not shown), when the data at the terminals $P_0$ through $P_7$ is read by the fall of the potential of the clock signal $T_2$ from the terminal $P_8$, the CPU output data is obtained. Contrary to this, when the data at the terminals $P_0$ through $P_7$ is read by the rise of the potential of the clock signal $T_2$, the DMA output data is obtained.

Thus, CPU data and the DMA data are alternately transmitted through the ports 6-0, 6-1, ..., 6-7 to the terminals $P_0$, $P_1$, ..., $P_7$, however, it is necessary to know the address of a DMA output data (word) transmitted at the terminals $P_0$, $P_1$, ..., $P_7$. For this purpose, the terminal $P_9$ is provided.

The output potential of the OR gate 12 is low only when the value of the address counter 10 is 00 ... 0 (="0"). In addition, as illustrated in Figure 2C the output potential $T_3$ of the NOR gate 13 is high only when the potential of each of the signals $T_1$ and $\overline{T}_2$ and the value of the address counter 10 is "0". Therefore, the value of the address counter 10 can be read by providing an appropriate external counter (not shown). That is, the external counter is reset by the rise of the potential $T_3$ at the terminal $P_9$ and is incremented by one count by the rise of the potential $T_2$.

The present invention has the advantage that direct data transfer between the RAM and the exterior can take place without increasing the number of terminals to a significant extent.

## Claims

1. A one chip microcomputer in which the following elements are all integrated together on a single semiconductor chip:

a central processing unit (CPU 1) having arithmetic, logic and control units;

an internal random access memory (RAM 3) for storing intermediate data with instructions processed by the central processing unit (CPU 1);

a direct memory access controller (DMAC 2) controlled by signals (T2) from the central processing unit (CPU 1) for providing a read out of data stored in a predetermined area of the internal random access memory (RAM 3);

a parallel (4) input/output port;

terminal means (P) associated with the input/output port (4),

a data bus (9) for carrying the said data stored in the said predetermined area of the internal random access memory (RAM 3);

means (6-0, ... 6-7) coupling the input/output port (4) and the data bus (9) to the terminal means (P);

a time division means (5) controlling the means (6-0 ... 6-7) coupling the input/output port (4) and the data bus (9) to the terminal means (P), the time division means (5) being controlled by the direct memory access controller (DMAC 2) so that, during a central processing unit operating mode, data processed by the central processing unit (CPU 1) is transferred directly from the input/output port (6-0, ... 6-7) to the terminal means (P), and during the direct memory access mode the said data stored in said predetermined area of the internal random access memory (RAM 3) is transferred from the data bus (9) to the terminal means (P); and,

means ($P_8$) to provide synchronisation signals to indicate the central processing unit operating mode or the direct memory access mode,

characterised in that it also includes an address counter (10) controlled by the direct memory access controller (DMAC 2) for generating an address signal to read the said data from the said predetermined area of the internal random access memory (RAM 3); and,

means (P$_9$) to provide synchronisation signals to enable the address of the internal random access memory (RAM 3) being accessed to be identified without requiring an external address bus.

2. A one chip microcomputer according to claim 1 in which the input/output port includes an output buffer register (OB 4) for storing the said data processed by the central processing unit, and in which the means coupling the input/output port or the data bus (9) to the terminal means includes gate means (G$_1$, G$_2$, G$_3$).

**Patentansprüche**

1. Ein-Chip-Mikrocomputer, in welchen die folgenden Elemente alle zusammen auf einem einzigen Halbleiterchip integriert sind:

eine zentale Prozessoreinheit (CPU 1), welche Arithmetic-, Logik- und Steuereinheiten hat;

ein interner Speicher mit wahlfreiem Zugriff (RAM 3), zur Speicherung von Zwischendaten mit Instruktionen, die durch die zentrale Prozessoreinheit (CPU 1) verarbeitet wurden;

ein direkter Speicherzugriffscontroller (DMAC 2), der durch Signale (T2) von der zentralen Prozessoreinheit (CPU 1) gesteuert wird, um ein Auslesen von Daten, die in einem vorbestimmten Bereich des internen Speichers mit wahlfreiem Zugriff (RAM 3) gespeichert sind, vorzusehen;

ein paralleler (4) Eingangs/Ausgangs-Port;

Anschlußeinrichtungen (P), die dem Eingangs/Ausgangs-Port (4) zugeordnet sind,

ein Datenbus (9) zum Führen der genannten Daten, die in dem genannten vorbestimmten Bereich des internen Speichers mit wahlfreiem Zugriff (RAM 3) gespeichert sind;

Einrichtungen (6-0, . . . 6-7), die den Eingangs/Ausgangs-Port (4) und den Datenbus (9) mit den Anschlußeinrichtungen (P) verbinden;

eine Zeitteilungseinrichtung (5), welche die Einrichtungen (6-0 . . . 6-7), die den Eingangs/Ausgangs-Port (4) und den Datenbus (9) mit den Anschlußeinrichtungen (P) verbinden, steuern, wobei die Zeitteilungseinrichtung (5) von dem direkten Speicher zugriffscontroller (DMAC 2) so gesteuert wird, daß während des Betriebsmodus der zentralen Prozessoreinheit Daten, die von der zentralen Prozessoreinheit (CPU 1) verarbeitet werden, direkt von dem Eingangs/Ausgangs-Port (6-0, . . . 6-7) zu den Anschlußeinrichtungen (P) übertragen werden, und während des direkten Speicherzugriffsmodus die genannten Daten, die in dem vorbestimmten Bereich des internen Speichers mit wahlfreiem Zugriff (RAM 3) gespeichert sind, von dem Datenbus (9) zu den Anschlußeinrichtungen (P) übertragen werden; und,

Einrichtungen (P$_8$), welche Synchronisations-signale liefern, um der zentralen Prozessoreinheit den Betriebsmodus oder den direkten Speicherzugriffsmodus anzuzeigen,

dadurch gekennzeichnet, daß er auch einen Adressenzähler (10) umfaßt, der durch den direkten Speicherzugriffscontroller (DMAC 2) zur Erzeugung eines Adressensignals gesteuert wird, um die Daten aus dem genannten vorbestimmten Bereich des internen Speichers (RAM 3) mit wahlfreiem Zugriff zu lesen; und,

Einrichtungen (P$_9$), um synchronisationssignale zu liefern, um zu ermöglichen, daß die Adresse des internen Speichers (RAM 3) mit wahlfreiem Zugriff, zu der zugegriffen wird, identifiziert wird, ohne einen externen Adressenbus zu erfordern.

2. Ein-Chip-Mikrocomputer nach Anspruch 1, bei welchem der Eingangs/Ausgangs-Port ein Ausgangspufferregister (OB 4) zur Speicherung der genannten Daten umfaßt, die von der zentralen Prozessoreinheit verarbeitet werden, und bei welchen die Einrichtungen, welche den Eingangs/Ausgangs-Port mit dem Datenbus (9) zu den Anschlußeinrichtungen verbinden, Gate-einrichtungen (G$_1$, G$_2$, G$_3$) umfassen.

**Revendications**

1. Micro-ordinateur à une seule puce, dans lequel les éléments suivants sont tous intégrés sur une seule puce semiconductrice:

une unité centrale de traitement (CPU 1) possédant des unités arithmétique, logique et de commande;

une mémoire vive interne (RAM 3) servant à emmagasiner des données intermédiaires avec des instructions traitées par l'unité centrale de traitement (CPU 1);

un dispositif de commande d'accès direct en mémoire (DMAC 2) commandé par des signaux (T$_2$) provenant de l'unité centrale de traitement (CPU 1) et servant à permettre une lecture des données emmagasinées dans une zone prédéterminée de la mémoire vive interne (RAM 3);

un moyen d'entrée-sortie (4) en parallèle;

des bornes (P) associées au moyen d'entrée-sortie (4);

un bus de données (9) servant à transporter lesdites données emmagasinées dans ladite zone prédéterminée de la mémoire vive interne (RAM 3);

des moyens (6-0, . . . , 6-7) qui couplent le moyen d'entrée-sortie (4) et le bus de données (9) aux bornes (P);

un moyen (5) de division temporelle qui commande les moyens (6-0, . . . , 6-7) de couplage du moyen d'entrée-sortie (4) et du bus de données (9) aux bornes (P), le moyen de division temporelle (5) étant commandé par le dispositif de commande d'accès direct en mémoire (DMAC 2) de sorte que, pendant un mode de fonctionnement de l'unité centrale de traitement les données traitées par l'unité centrale de traitement (CPU 1) sont transférées directement du moyen d'entrée-sortie (6-0, . . . , 6-7) aux bornes (P) et, pendant le mode d'accès direct en mémoire, lesdites données emmagasinées dans ladite zone prédéterminée de la mémoire vive interne (RAM 3) sont transférées du bus de données (9) aux bornes (P); et

un moyen ($P_8$) servant à fournir des signaux de synchronisation permettant d'indiquer le mode de fonctionnement de l'unité centrale de traitement ou le mode d'accès direct en mémoire;

caractérisé en ce qu'il comporte également un compteur d'adresse (10) commandé par le dispositif de commande d'accès direct en mémoire (DMAC 2) et servant à produire une signal d'adresse en vue de la lecture desdites données dans ladite zone prédéterminée de la mémoire vive interne (RAM 3); et

un moyen ($P_9$) servant à fournir des signaux de synchronisation destinés à permettre que l'adresse de la mémoire vive interne (RAM 3) à laquelle il est accèdè au moment considéré soit identifiée sans qu'il soit besoin d'un bus d'adresse externe.

2. Micro-ordinateur à une seule puce selon la revendication 1, où le moyen d'entrée-sortie comporte un registre tampon de sortie (OB 4) servant à emmagasiner lesdites données traitées par l'unité centrale de traitement, et où le moyen de couplage du moyen d'entrée-sortie ou du bus de données (9) avec les bornes comporte des portes ($G_1$, $G_2$, $G_3$).

Fig. 1

0 062 431

Fig. 2 A

Fig. 2 B

Fig. 2 C

T₁

T₂

T₃

"0"  "1"  "2"  "3"  "4"  "5"

0 062 431